# EUROPEAN PATENT SPECIFICATION

(11) **EP 0 644 471 B1**
(45) Date of publication and mention of the grant of the patent: **29.03.2000**
(21) Application number: 94402067.6
(22) Date of filing: 16.09.1994
(51) Int. Cl.: G05B 19/416

(54) **Numerical control method and numerical control system with setting of a pattern of acceleration and deceleration**
Verfahren und System zur numerischen Steuerung mit Sollwerteinstellung von Beschleunigung und Verzögerung
Méthode et système de commande numérique avec réglage de consigne d'accélération et de décélération

(30) Priority: 16.09.1993 JP 23025293
(43) Date of publication of application: 22.03.1995
(73) Proprietor: SONY CORPORATION, Tokyo (JP)
(72) Inventor: Itoh, Ietoshi, c/o Sony Corporation, Tokyo (JP)
(74) Representative: Orian, Yvette Suzanne

(56) References cited:
- EP-A- 0 089 156
- EP-A- 0 191 103
- GB-A- 2 018 466
- PATENT ABSTRACTS OF JAPAN vol. 12 no. 460 (P-795) ,5 December 1988 & JP-A-63 182715 (OMRON TATSEI ELECTRONICS CO.) 28 July 1988,

## Description

### BACKGROUND OF THE INVENTION

### 1. Field of the Invention

The present invention relates to a numerical control method and a numerical control system used for the control of various types of PTP (point to point) operations such as robot control, temperature control, camera focus control, slide control of a CD player, video disk, and the like, and DC point control of electrical circuits. More particularly, it relates to a numerical control method and numerical control system which enable free setting of a pattern of acceleration and deceleration free from the amount of movement or the time of movement.

### 2. Description of the Related Art

In general, in a servo control circuit, there is known a method for converting information on the phase and speed of a controlled object to a pattern, storing the same in advance in a memory, and later reading out the information in accordance with a target point to control the object at different points of time. In this case, the acceleration curve and deceleration curve are tinkered with so that the controlled object will be operated smoothly and within the desired time.

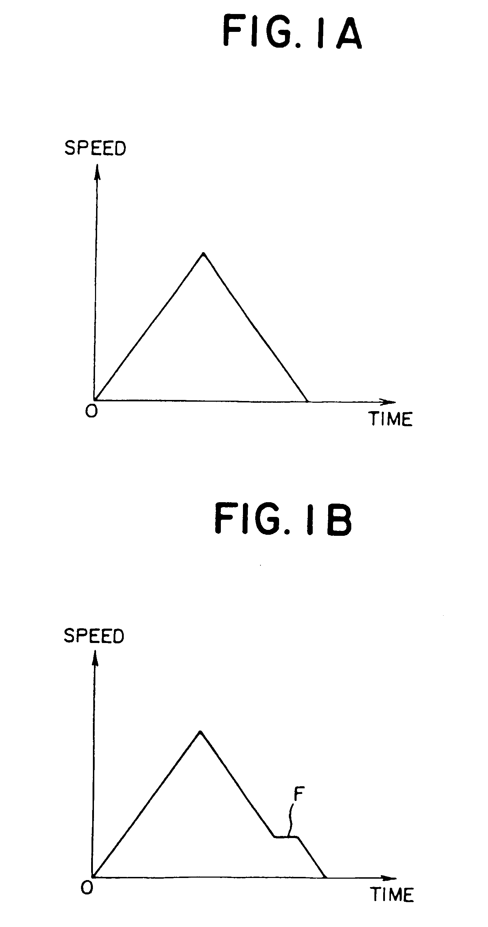

For example, the most general pattern of acceleration and deceleration is the triangular pattern shown in Fig. 1A, but since the acceleration jumps at three locations: the starting point of movement, the peak point, and the target point, it suffers from the disadvantage that a shock is easily given to the mechanical system. Further, this cannot be said to be optimal as the input to a servo control circuit.

Therefore, as shown in Fig. 1B, proposal has been made of a pattern of acceleration and deceleration which provides a constant speed portion F as a stopping measure immediately before the target point, but even with this pattern of acceleration and deceleration, the jumps in acceleration at the starting point of movement and the peak point in the transition from acceleration to deceleration are not eliminated, so it also suffers from the disadvantage of the shock to the mechanical system cannot be completely resolved. Further, the disadvantage that the input is not the optimal one for a servo control system similarly remains.

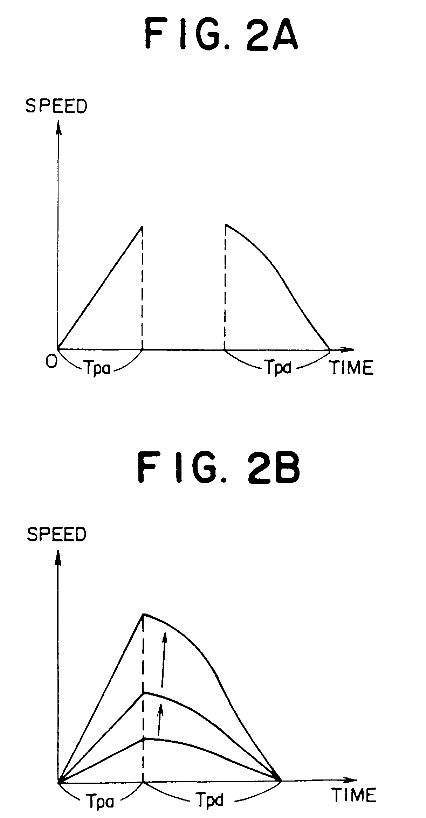

On the other hand, to achieve a smooth operation at the time of acceleration and deceleration, the method has been proposed of storing in advance in a read-only-memory (ROM) the smooth pattern of acceleration and deceleration as shown in Fig. 2A. By this technique, problems in overshooting and precision of stopping are remarkably eliminated. However, the acceleration and deceleration times are made constant, so if the amount of movement is increased, the acceleration and deceleration curve also grows higher as shown in Fig. 2B and the problems in the precision of stopping at the time of a stop and shock to the mechanical system reappear. Further, it suffers from the disadvantage that the form of the acceleration and deceleration cannot be freely changed.

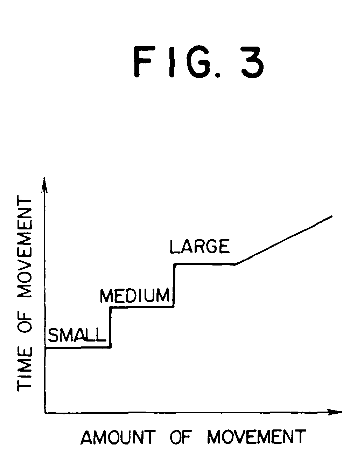

To overcome the above disadvantages, as shown in Fig.3, the method has been proposed of classifying the amount of movement into large, medium, and small movement and storing in advance in a ROM patterns of acceleration and deceleration with acceleration times and deceleration times suitable for each of the same, but the disadvantage remains in that this results in a massive required memory capacity and further unnatural characteristics of the amount of movement and movement time, so is not preferable in terms of control. Further, it was not possible to freely change the acceleration and deceleration by this technique.

A numerical control method and system is proposed in EP-A-0 089 156, for control of the position of a robot arm by control of the frequency of driving pulses fed to a servo system. In the described method, a normalised target function for the pulse frequency is stored in memory. The frequency of driving pulses fed to the servo system at the time of a commanded movement is equal to the product of the stored target function and the commanded amount of displacement, divided by the time spent in acceleration (or deceleration, the acceleration/deceleration characteristic being symmetrical). In this system too, the form of the acceleration and deceleration cannot be freely changed.

GB-A-2 018 466 describes a numerical control system in which a triangular-type acceleration/deceleration characteristic is applied.

EP-A-0 191 103 describes a numerical control method and apparatus for controlling the two connected portions of a hinged arm by outputting target velocity or position values to motors or decelerators located at the hinges. Normalized acceleration/deceleration characteristics are stored in memory together with data related to the load torque on the motors/decelerators when the robot arm is in particular positions. The stored load/torque data is used to determine the amount of time to be spent in acceleration (or deceleration) when exercising point-to-point control, or the amount of movement to be achieved during the acceleration/deceleration. A velocity or position command is issued based on the stored acceleration/deceleration characteristic and this calculated amount of time/movement.

The entry in the journal "Patent Abstracts of Japan" vol.12, no.460 (P-795), 5 December 1988, regarding Japanese patent application JP63-182715, describes a numerical control method and apparatus for performing point-to-point movement of an object, the object's speed being controlled during the movement. A target function is stored, but that target function relates to a normalised speed characteristic which is read out depending on the deviation of the position of the object from the desired position. In this way, the maximum velocity of the object can be limited.

### SUMMARY OF THE INVENTION

The present invention was made in consideration of the above disadvantages mentioned above, and thus, an object of the present invention is to enable free setting of the pattern of acceleration and deceleration free from the amount of movement or movement time with the assumption of realization of quick, smooth PTP operations.

To achieve the above-mentioned object, the numerical control method of the present invention lies in a numerical control method for controlling the value of a parameter, as it changes between a first value and a second value, in conformity with a target function defining how the value of the controlled parameter changes with time, characterised in that it comprises the following steps:
inputting a value for the difference between the first and second values of the controlled parameter;
inputting a normalised target function, wherein the normalised target function is a function defining a desired pattern of change of said controlled parameter with time, and comprises a first function defining the desired pattern of change during a time period when the rate of change of the controlled parameter is increasing and a second function defining the desired pattern of change during a time period when the rate of change of the controlled parameter is decreasing;
calculating correction values based on said input difference and said input normalised target function; and
computing said target function from said input difference, said input normalised target function and from the calculated correction values, said target function (Yₐ(t)) during the time period when the rate of change of the controlled parameter is increasing being computed according to:${\text{Y}}_{\text{a}} \text{(t) =} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔYt • β}}_{\text{a}} {\text{• y}}_{\text{a}} \text{(t)}$ and said target function (Y_{d}(t)) during the time period when the rate of change of the controlled parameter is decreasing being computed according to:${\text{Y}}_{\text{d}} \text{(t) =} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔYt • β}}_{\text{d}} {\text{• y}}_{\text{d}} \text{(t)}$ where${\text{δ}}_{\text{a}} {\text{(T}}_{\text{pa}} \text{) =} \frac{{\text{y}}_{\text{a}} {\text{(T}}_{\text{pa}} \text{)}}{{{\text{y}}^{̇}}_{\text{a}} {\text{(T}}_{\text{pa}} \text{)}} \text{,}$${\text{δ}}_{\text{d}} {\text{(T}}_{\text{pd}} \text{) =} \frac{{\text{y}}_{\text{d}} {\text{(T}}_{\text{pd}} \text{)}}{{{\text{y}}^{̇}}_{\text{d}} {\text{(T}}_{\text{pd}} \text{)}} \text{,}$${\text{β}}_{\text{a}} \text{=} \frac{\text{1}}{{\text{y}}_{\text{a}} {\text{(T}}_{\text{pa}} \text{)}}$ and${\text{β}}_{\text{d}} \text{=} \frac{\text{1}}{{\text{y}}_{\text{d}} {\text{(T}}_{\text{pd}} \text{)}} \text{.}$

Note that when the first and second functions of said normalised target function are respective triangular curves, the correction values βₐ = 1 and β_{d} = 1.

On the other hand, to achieve the above-mentioned object, the numerical control system of the present invention provides a numerical control system for controlling the value of a parameter, as it changes between a first value and a second value, in conformity with a target function defining how the value of the controlled parameter changes with time, characterised in that the system comprises:
an input unit which receives as an input the value of the difference between said first and second values of the controlled parameter, and a normalised target function, the normalised target function being a function defining a desired pattern of change of said controlled parameter with time, and comprising a first function defining the desired pattern of change during a time period when the rate of change of the controlled parameter is increasing and a second function defining the desired pattern of change during a time period when the rate of change of the controlled parameter is decreasing, said first and second functions each being a dimensionless smooth continuous function;
a correction value calculating unit which calculates correction values based on said difference and on said normalised target function; and
a target function computation unit which computes the target function based on the input normalised target function, the input value for the difference between the first and second values of the controlled parameter, and the calculated correction values;
wherein the target function computation unit is adapted to compute the value of said target function (Yₐ(t)) applicable during the time period when the rate of change of the controlled parameter is increasing according to:${\text{Y}}_{\text{a}} \text{(t) =} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔYt • β}}_{\text{a}} {\text{• y}}_{\text{a}} \text{(t)}$ and to compute the value of said target function (Y_{d}(t)) applicable during the time period when the rate of change of the controlled parameter is decreasing according to:${\text{Y}}_{\text{d}} \text{(t) =} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔYt • β}}_{\text{d}} {\text{• y}}_{\text{d}} \text{(t)}$ where${\text{δ}}_{\text{a}} {\text{(T}}_{\text{pa}} \text{) =} \frac{{\text{y}}_{\text{a}} {\text{(T}}_{\text{pa}} \text{)}}{{{\text{y}}^{̇}}_{\text{a}} {\text{(T}}_{\text{pa}} \text{)}} \text{,}$${\text{δ}}_{\text{d}} {\text{(T}}_{\text{pd}} \text{) =} \frac{{\text{y}}_{\text{d}} {\text{(T}}_{\text{pd}} \text{)}}{{{\text{y}}^{̇}}_{\text{d}} {\text{(T}}_{\text{pd}} \text{)}} \text{,}$${\text{β}}_{\text{a}} \text{=} \frac{\text{1}}{{\text{y}}_{\text{a}} {\text{(T}}_{\text{pa}} \text{)}} \text{,}$ and${\text{β}}_{\text{d}} \text{=} \frac{\text{1}}{{\text{y}}_{\text{d}} {\text{(T}}_{\text{pd}} \text{)}} \text{.}$

In a servo loop for controlling an arbitrary physical amount Y, reference values Y_{ref} of the physical-state representing amount are input. In such a servo system, it is strongly demanded to quickly and smoothly move from a reference value Y_{ref1} to a reference value Y_{ref2}.

For example, a PTP (point to point) operation which does not dictate the path from reference point Y_{ref1} to the reference value Y_{ref2} is made use of in a wide range of fields such as robot control, temperature control, camera focus control, slide control of a CD player, video disk, and the like, and DC point control of electrical circuits.

Therefore, in the present invention, an algorithm has been constructed for enabling free and easy generation of new target functions, by introduction of a very small number of parameters, along with changes in the factors characterizing the target functions, i.e., (1) the pattern of acceleration and deceleration, (2) the amount of change, and (3) the changes in the acceleration time and deceleration time (including expansion and contraction of time axis).

That is, if the desired target functions Ya(t) and Y_{d}(t) are normalized as${\text{Y}}_{\text{a}} {\text{(t) = ΔY}}_{\text{a}} {\text{• β}}_{\text{a}} {\text{• y}}_{\text{a}} {\text{(t) 0 < t < T}}_{\text{pa}}$${\text{Y}}_{\text{d}} {\text{(t) = ΔY}}_{\text{d}} {\text{• β}}_{\text{d}} {\text{• y}}_{\text{d}} {\text{(t) 0 < t < T}}_{\text{pd}}$ the parameter β may be found for any normalized target function as${\text{β}}_{\text{a}} \text{=} \frac{\text{1}}{{\text{y}}_{\text{a}} {\text{(T}}_{\text{pa}} \text{)}}$${\text{β}}_{\text{d}} \text{=} \frac{\text{1}}{{\text{y}}_{\text{d}} {\text{(T}}_{\text{pd}} \text{)}}$

On the other hand, if another parameter δ having a time dimension is introduced as${\text{ΔY}}_{\text{a}} {\text{= δ}}_{\text{a}} {\text{(T}}_{\text{pa}} \text{) •} {{\text{Y}}^{̇}}_{\text{a}} {\text{(T}}_{\text{pa}} \text{)}$${\text{ΔY}}_{\text{d}} {\text{= δ}}_{\text{d}} {\text{(T}}_{\text{pd}} \text{) •} {{\text{Y}}^{̇}}_{\text{d}} {\text{(T}}_{\text{pd}} \text{)}$ the parameter δ also may be found for any normalized target function as${\text{δ}}_{\text{a}} {\text{(T}}_{\text{pa}} \text{) =} \frac{\text{1}}{{\text{β}}_{\text{a}} \text{•} {{\text{y}}^{̇}}_{\text{a}} {\text{(T}}_{\text{pa}} \text{)}} \text{=} \frac{{\text{y}}_{\text{a}} {\text{(T}}_{\text{pa}} \text{)}}{{{\text{y}}^{̇}}_{\text{a}} {\text{(T}}_{\text{pa}} \text{)}}$${\text{δ}}_{\text{d}} {\text{(T}}_{\text{pd}} \text{) =} \frac{\text{1}}{{\text{β}}_{\text{d}} \text{•} {{\text{y}}^{̇}}_{\text{d}} {\text{(T}}_{\text{pd}} \text{)}} \text{=} \frac{{\text{y}}_{\text{d}} {\text{(T}}_{\text{pd}} \text{)}}{{{\text{y}}^{̇}}_{\text{d}} {\text{(T}}_{\text{pd}} \text{)}}$

Accordingly, the desired target functions are given as${\text{Y}}_{\text{a}} \text{(t) =} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}} {\text{• β}}_{\text{a}} {\text{• y}}_{\text{a}} \text{(t)} {\text{0 ≤ t ≤ T}}_{\text{pa}}$${\text{Y}}_{\text{d}} \text{(t) =} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}} {\text{• β}}_{\text{d}} {\text{• y}}_{\text{d}} \text{(t)} {\text{0 ≤ t ≤ T}}_{\text{pd}}$ and further the above equations are given as the following even in the case of expansion and contraction of the time axis${\text{Y}}_{\text{a}} {\text{(t)}}_{\text{t=t/α}} \text{=} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}} {\text{• β}}_{\text{a}} {\text{• y}}_{\text{a}} {\text{(t)}}_{\text{t=t/α}} {\text{0 ≤ t ≤ αT}}_{\text{pa}}$${\text{Y}}_{\text{d}} {\text{(t)}}_{\text{t=t/α}} \text{=} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}} {\text{• β}}_{\text{d}} {\text{• y}}_{\text{d}} {\text{(t)}}_{\text{t=t/α}} {\text{0 ≤ t ≤ αT}}_{\text{pd}}$ so it is possible to easily compute them no matter what the amount of change ΔYₜ, normalized target function y(t), and time.

### BRIEF DESCRIPTION OF THE DRAWINGS

The above objects and features and other objects and features of the present invention will be more apparent from the following description made with reference to the accompanying drawings, in which:
Figs. 1A and 1B are graphs showing patterns of acceleration and deceleration;
Figs. 2A and 2B are similarly graphs showing patterns of acceleration and deceleration;
Fig. 3 is a graph similarly showing the relationship in the movement time with respect to the amount of movement in the related art;
Fig. 4 is a graph showing the relationship between the target position and time for explaining the principle of the present invention and a graph showing the relationship between the target speed and time;

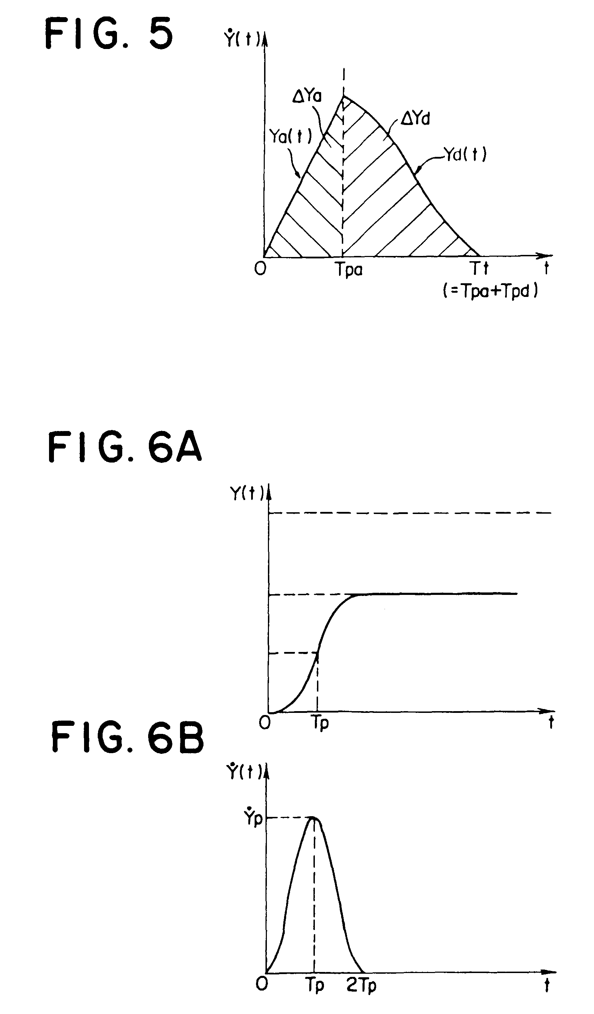

Fig. 5 is a similar graph showing the relationship between the target speed and time for explaining the principle of the present invention;
Figs. 6A and 6B are graphs showing the relationship between the target position and time for explaining the principle of the present invention and a graph showing the relationship between the target speed and time;
Fig. 7 is a graph showing the relationship between the target speed and time for explaining the parameter δ according to the present invention;
Fig. 8 is a graph showing the relationship between the movement distance and movement time in the present invention;
Fig. 9 is a graph showing the relationship between the target speed and time for explaining matching of the acceleration and deceleration curves of the present invention;
Fig. 10 is a graph showing the relationship between the target speed and time for explaining the maximum speed in the present invention;
Fig. 11 is a similar conceptual view for explaining the maximum speed in the present invention;
Fig. 12 is a graph showing the relationship between the target position and time for explaining the expansion and contraction of the time axis in the present invention;
Fig. 13 is a graph showing a triangular type acceleration and deceleration pattern of an example of application of the present invention;
Fig. 14 is a graph showing the sine type acceleration and deceleration pattern of another example of application of the present invention.
Fig. 15A is a signal flow chart showing the exponential type acceleration and deceleration pattern of a still other example of application of the present invention;
Fig. 15B is a graph showing the relationship between the target position and time;
Fig. 15C is a graph showing the relationship between the target speed and time, and
Figs. 16A and 16B are graphs showing other examples of application of the present invention.

### DESCRIPTION OF THE PREFERRED EMBODIMENTS

Below, the principle and examples of application of the present invention will be explained in the following order with reference to the drawings:

### [Principle of Present Invention]

### Target Functions and Target Speed Functions

### Problems

### Principle of Generation of Target Functions

(1) Normalized Target Functions yₐ(t) and y_{d}(t)
(2) Parameter β
(3) Parameter δ
(4) Matching of Acceleration Curve and Deceleration Curve
(5) Maximum Speed
(6) Expansion and Contraction of Time Axis
   (i) Normalized Target Function y(t)
   (ii) Parameter β
   (iii) Parameter δ(Tₚ)

### [Examples of Application]

### Triangular Type

### Sin Type

### Exp Type

### Combination

### [Principle of Present Invention]

First, clarification will be made of the problems which arise when building an algorithm which enables free and easy production of new target functions through introduction of an extremely small number of parameters along with changes in the characterizing factors of target functions, that is,
[1] the parameter of acceleration and deceleration,
[2] the amount of movement (amount of change), and
[3] the acceleration time and deceleration time (including expansion and contraction of time axis)
and then the principle of production of a target function will be explained.

### Target Functions and Target Speed Functions

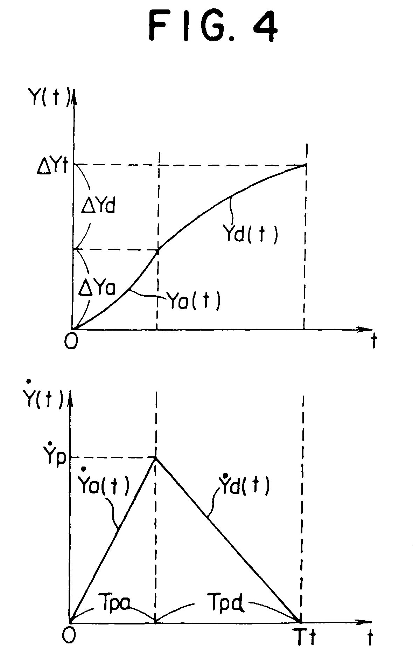

The symbols and parameters used in the above explanation are as shown in Fig. 4. Here, the acceleration time is given as Tₚₐ, the deceleration time as T_{pd}, the total movement time as Tₜ, the amount of acceleration movement as ΔYₐ, the amount of deceleration movement as ΔY_{d}, the total amount of movement ΔYₜ, and the peak speed as Ẏₚ.

**Table**

| | |
|---|---|
| Tₚₐ | ACCELERATION TIME |
| T_{pd} | DECELERATION TIME |
| Tt | TOTAL MOVEMENT TIME (= Tₚₐ + T_{pd}) |
| ΔYa | AMOUNT OF ACCELERATION MOVEMENT |
| ΔYd | AMOUNT OF DECELERATION MOVEMENT |
| ΔYt | TOTAL AMOUNT OF MOVEMENT (=ΔYa + ΔYd) |
| Ẏp | PEAK SPEED |

Here, the following stand:${\text{Total movement time T}}_{\text{t}} {\text{= acceleration time T}}_{\text{pa}} {\text{+ deceleration time T}}_{\text{pd}}$${\text{Total amount of movement ΔY}}_{\text{t}} \text{= amount of acceleration} {\text{movement ΔY}}_{\text{a}} {\text{+ amount of deceleration movement ΔY}}_{\text{d}}$

Further, when the time is t and the target value (position, temperature, voltage, etc.) is Y, Y(t) expresses the target function and the time differential dY(t)/dt of the target function expresses the target speed function. The relationship of the target value Y with respect to the time is shown at the top of Fig. 4, while the relationship of the target speed to the time is shown at the bottom of Fig. 4.

### Problems

The main factors characterizing a target function may be said to be (1) the pattern of acceleration and deceleration, (2) the amount of movement ΔYₜ, and (3) the expansion and contraction of the time axis, such as the acceleration time Tₚₐ and the deceleration time T_{pd}. Accordingly, the task given to the present invention is to construct an algorithm which enables free and easy production of a new target function by introduction of a very small number of parameters to deal with changes in such factors.

For example, when using the triangular acceleration and deceleration curve shown in Fig. 4, to ensure that no shock was given to a robot arm at the stopping point (t = Tₜ) of the arm, it was necessary to increase the deceleration time T_{pd} or change the deceleration target function Y_{d}(t)dot to a smoother function. Further, a need arose for changing the shape of the target function or the acceleration and deceleration time along with changes in the amount of movement ΔYₜ.

In the past, there were no clear cut guidelines regarding such changes, so everything was left to the ability of experienced designers. Sometimes, the control data had to be decided on after a process of repeated trial and error.

Accordingly, there were the problems that the control data decided on was governed by the ability of the designer and that inefficiency of design was caused.

### Principle of Generation of Target Functions

Next, an explanation will be made of the principle for solving the above-mentioned task.

### (1) Normalized Target Functions yₐ(t) and y_{d}(t)

According to the above-mentioned task, since it is necessary to deal with all types of the amount of movement ΔYₜ, first the target function is normalized. That is, when the target function at acceleration is Yₐ(t) and the target function at deceleration is Y_{d}(t), the following is set${\text{Y}}_{\text{a}} {\text{(t) = ΔY}}_{\text{a}} {\text{• β}}_{\text{a}} {\text{• y}}_{\text{a}} {\text{(t) 0 ≤ t ≤ T}}_{\text{pa}}$${\text{Y}}_{\text{d}} {\text{(t) = ΔY}}_{\text{d}} {\text{• β}}_{\text{d}} {\text{• y}}_{\text{d}} {\text{(t) 0 ≤ t ≤ T}}_{\text{pd}}$

Here, yₐ(t) and y_{d}(t) in equation (1) and equation (2) are dimension-less smooth continuous functions. These are referred to as normalized target functions.

Note that in the case of a normalized target function, the following stands:${\text{y}}_{\text{a}} {\text{(0) = 0, y}}_{\text{d}} \text{(0) = 0}$ and yₐ(t) gives the pattern (curve) at the time of acceleration and y_{d}(t) gives the pattern (curve) at the time of deceleration. That is, by changing the normalized target functions yₐ(t) and y_{d}(t) in accordance with need, it is possible to change the shape of the target function.

Note that in equation (2), y_{d}(t) is defined for 0 ≤ t ≤ T_{pd}, but it is possible to change to deceleration by applying a reversal operation of the time axis. More specifically, it is possible to substitute T_{pd} + Tpₐ - t in place of t in equation (2).

### (2) Parameter β

Further, βₐ and β_{d} in equation (1) and equation (2) are dimension-less parameters and are introduced for the following two purposes.

First, the first purpose is to give a degree of freedom to the selection of the normalized target function y(t). That is, when using the triangular pattern as shown in Fig. 4, the normalized target function yₐ(t) is introduced to enable absorption by the parameter β no matter if multiplied by t²/Tₚ², 10t²/Tₚ², or any other coefficient.

Further, the effect of the parameter β is not exhibited that much in the case of a simple function such as a triangular pattern, but a much more remarkable effect is obtained if a complicated function such as the later mentioned exponential (exp) type pattern is adopted.

Further, the second purpose of introduction of β is to establish a relationship between the normalized target function y(t) and the servo loop characteristic. That is, the normalized target function y(t) is an extremely important factor for a certain servo loop. By defining this relationship by β, use may be made of it when producing a target function.

Further, from equation (1) and equation (2),${\text{Y}}_{\text{a}} {\text{(T}}_{\text{pa}} {\text{) = ΔY}}_{\text{a}} {\text{• β}}_{\text{a}} {\text{• y}}_{\text{a}} {\text{(T}}_{\text{pa}} {\text{) = ΔY}}_{\text{a}}$${\text{Y}}_{\text{d}} {\text{(T}}_{\text{pd}} {\text{) = ΔY}}_{\text{d}} {\text{• β}}_{\text{d}} {\text{• y}}_{\text{d}} {\text{(T}}_{\text{pd}} {\text{) = ΔY}}_{\text{d}}$ so, βₐ and β_{d} may be expressed by${\text{β}}_{\text{a}} \text{=} \frac{\text{1}}{{\text{y}}_{\text{a}} {\text{(T}}_{\text{pa}} \text{)}}$${\text{β}}_{\text{d}} \text{=} \frac{\text{1}}{{\text{Y}}_{\text{d}} {\text{(T}}_{\text{pd}} \text{)}}$

If a normalized target function is inserted into equations (3) and (4), it is possible to find βₐ and β_{d} by calculation.

### (3) Parameter δ

As stated in relation to the task of the present invention mentioned earlier, the algorithm for producing the target function must be able to be freely used even with respect to expansion or contraction in the direction of the time axis, so another parameter δ (sec) is introduced. This parameter δ is defined as follows:${\text{ΔY}}_{\text{a}} {\text{= δ}}_{\text{a}} {\text{(T}}_{\text{pa}} \text{) •} {{\text{Y}}^{̇}}_{\text{a}} {\text{(T}}_{\text{pa}} \text{)}$${\text{ΔY}}_{\text{d}} {\text{= δ}}_{\text{d}} {\text{(T}}_{\text{pd}} \text{) •} {{\text{Y}}^{̇}}_{\text{d}} {\text{(T}}_{\text{pd}} \text{)}$

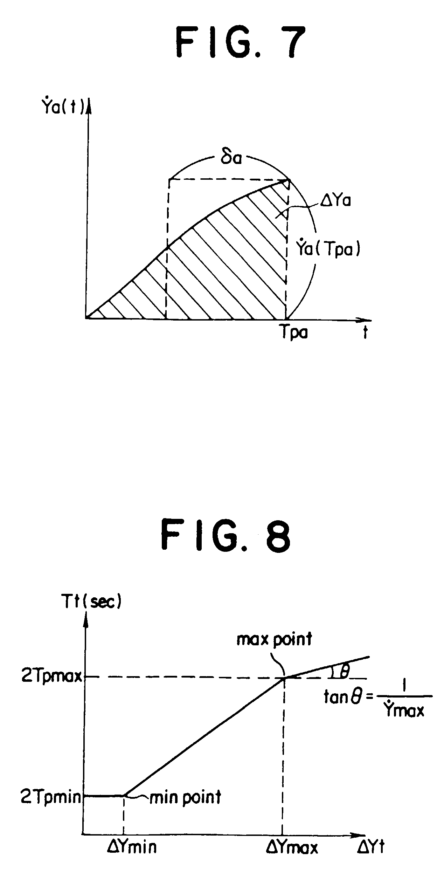

That is, the parameter δ means the length of the horizontal axis (time axis) of the rectangular shape of the height Yₐ(Tₚₐ)dot (shown by the dotted line in Fig. 7 which gives an area equal to the area ΔYₐ surrounded by the acceleration (deceleration) curve as shown in Fig. 7. Note that this is expressed as a function of Tₚ like δ(Tₚ) because the value of δ is dependent on Tₚₐ and T_{pd}.

The parameter δ may be found in the following way:

That is, if the two sides of equation (1) and equation (2) are differentiated by the time t and t = Tₚ substituted in them, then the result becomes${{\text{Y}}^{̇}}_{\text{a}} {\text{(T}}_{\text{pa}} {\text{) = ΔY}}_{\text{a}} {\text{• β}}_{\text{a}} \text{•} {{\text{y}}^{̇}}_{\text{a}} {\text{T}}_{\text{pa}} \text{)} {\text{= δ}}_{\text{a}} {\text{(T}}_{\text{pa}} \text{) •} {{\text{Y}}^{̇}}_{\text{a}} {\text{(T}}_{\text{pa}} {\text{) • β}}_{\text{a}} \text{•} {{\text{y}}^{̇}}_{\text{a}} {\text{(T}}_{\text{pa}} \text{)}$${{\text{Y}}^{̇}}_{\text{d}} {\text{(T}}_{\text{pd}} {\text{) = ΔY}}_{\text{d}} {\text{• β}}_{\text{d}} \text{•} {{\text{y}}^{̇}}_{\text{d}} {\text{(T}}_{\text{pd}} \text{)} {\text{= δ}}_{\text{d}} {\text{(T}}_{\text{pd}} \text{) •} {{\text{Y}}^{̇}}_{\text{d}} {\text{(T}}_{\text{pd}} {\text{) • β}}_{\text{d}} \text{•} {{\text{y}}^{̇}}_{\text{d}} {\text{(T}}_{\text{pd}} \text{)}$ where,${\text{δ}}_{\text{a}} {\text{(T}}_{\text{pa}} \text{) =} \frac{\text{1}}{{\text{β}}_{\text{a}} \text{•} {{\text{y}}^{̇}}_{\text{a}} {\text{(T}}_{\text{pa}} \text{)}} \text{=} \frac{{\text{y}}_{\text{a}} {\text{(T}}_{\text{pa}} \text{)}}{{{\text{y}}^{̇}}_{\text{a}} {\text{(T}}_{\text{pa}} \text{)}}$${\text{δ}}_{\text{d}} {\text{(T}}_{\text{pd}} \text{) =} \frac{\text{1}}{{\text{β}}_{\text{d}} \text{•} {{\text{y}}^{̇}}_{\text{d}} {\text{(T}}_{\text{pd}} \text{)}} \text{=} \frac{{\text{y}}_{\text{d}} {\text{(T}}_{\text{pd}} \text{)}}{{{\text{y}}^{̇}}_{\text{d}} {\text{(T}}_{\text{pd}} \text{)}}$

If particular values for the normalized target functions are inserted into these equations (9) and (10), then it is possible to find the parameter δ by calculation.

### (4) Matching of Acceleration curve and Deceleration Curve

Up to here, the acceleration and deceleration have been treated independently, but the target speed function which is produced in the end must be continuously linked around t = Tₚₐ. Accordingly, below, the relationship linking acceleration and deceleration is found.

If the total amount of movement is ΔYₜ and the total movement time is Tₜ, then as mentioned above, the following relationship stands:${\text{ΔY}}_{\text{t}} {\text{= ΔY}}_{\text{a}} {\text{+ ΔY}}_{\text{d}}$${\text{T}}_{\text{t}} {\text{= T}}_{\text{pa}} {\text{+ T}}_{\text{pd}}$

In this case, the total amount of movement ΔYₜ and the total movement time Tₜ are by nature determined by a large system including the servo system and the algorithm of the present invention does not have anything to do with the determination of the system. In particular, the movement time Tₜ, that is, Tₚₐ and T_{pd}, is an important factor in the system and is determined by the magnitude of the load of the servo system and other physical situations, the capacities of the actuator and power system, etc. For example, as shown in Fig. 8, there are cases where it is determined as a function of ΔYₜ:

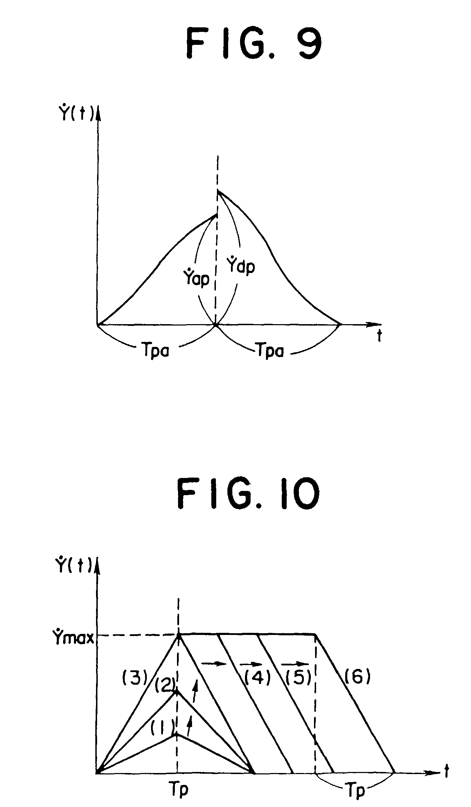

Further, if the peak speed Yₐ(Tₚₐ)dot at the time of acceleration and the peak speed Y_{d}(T_{pd})dot at the time of deceleration are not equal, then as shown in Fig. 9, the speed jumps around t = Tₚₐ, which is not preferable as a target function. Therefore, if the two peak speeds are made equal, then${{\text{Y}}^{̇}}_{\text{a}} {\text{(T}}_{\text{pa}} \text{) =} {{\text{Y}}^{̇}}_{\text{d}} {\text{(T}}_{\text{pd}} \text{) =} {{\text{Y}}^{̇}}_{\text{p}}$ and from equation (5), equation (6), and equation (11),${\text{ΔY}}_{\text{t}} {\text{= { δ}}_{\text{a}} {\text{(T}}_{\text{pa}} {\text{) + δ}}_{\text{d}} {\text{(T}}_{\text{pd}} \text{) }} {{\text{Y}}^{̇}}_{\text{p}}$ is obtained.

The acceleration time Tₚₐ and deceleration time T_{pd} are already determined, so δₐ(Tₚₐ) and δ_{d}(T_{pd}) become known from equation (9) and equation (10) and in the end the peak speed Ẏₚ is determined by the following equation (15):${{\text{Y}}^{̇}}_{\text{p}} \text{=} \frac{{\text{ΔY}}_{\text{t}}}{{\text{δ}}_{\text{a}} {\text{(T}}_{\text{pa}} {\text{) + δ}}_{\text{d}} {\text{(T}}_{\text{pd}} \text{)}} \text{=} \frac{{\text{ΔY}}_{\text{t}}}{\frac{{\text{y}}_{\text{a}} {\text{(T}}_{\text{pa}} \text{)}}{{{\text{y}}^{̇}}_{\text{a}} {\text{(T}}_{\text{pa}} \text{)}} \text{+} \frac{{\text{y}}_{\text{d}} {\text{(T}}_{\text{pd}} \text{)}}{{\text{y}}^{̇} {\text{d(T}}_{\text{pd}} \text{)}}}$

Therefore, from equation (5) and equation (6), the amount of movement during acceleration ΔYₐ and the amount of movement during deceleration ΔY_{d} may be found by the following equation (16) and equation (17).${\text{ΔY}}_{\text{a}} \text{=} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}}$${\text{ΔY}}_{\text{d}} \text{=} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}}$

Therefore, if equation (16) and equation (17) are substituted in equation (1) and equation (2),${\text{Y}}_{\text{a}} \text{(t) =} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}} {\text{• β}}_{\text{a}} {\text{• y}}_{\text{a}} \text{(t)} {\text{0 ≤ t ≤ T}}_{\text{pa}}$${\text{Y}}_{\text{d}} \text{(t) =} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}} {\text{• β}}_{\text{d}} {\text{•y}}_{\text{d}} \text{(t)} {\text{0 ≤ t ≤ T}}_{\text{pd}}$

The right sides of these equation (18) and equation (19) are all determined, so it becomes possible to use these two equations to produce the target function Yₐ(t) of acceleration and the target function Y_{d}(t) of deceleration.

### (5) Maximum Speed

When a target function with symmetrical right and left sides, that is, a target function of Yₐ(t) = Y_{d}(t), is used at the time t = Tₚₐ, the speed Ẏₚ of the peak point increases if the amount of movement ΔYₜ increases. However, since there is a maximum speed Ẏ_{MAX} in an actuator, the target speed function grows as shown in Fig. 10 for example.

In this case, the area enclosed by the speed curve and the time axis is the amount of movement ΔYₜ, and the following stands:${\text{ΔY}}_{\text{t1}} {\text{< ΔY}}_{\text{t2}} {\text{< ΔY}}_{\text{t3}} {\text{< ... < ΔY}}_{\text{t6}}$ In particular, with the amount of movement ΔYₜ₃ of (3) shown in Fig. 10, there is is a match with the maximum speed Ẏ_{MAX}, so in this sense if ΔYₜ₃ is written as ΔY_{tMAX}, then from equation (5) and equation (6), the following stands:${\text{ΔY}}_{\text{max}} {\text{= δ(T}}_{\text{p}} \text{) •} {{\text{Y}}^{̇}}_{\text{max}}$

Using this, when the amount of movement ΔYₜ and the peak time Tₚ are given, it is possible to find the speed Ẏₚ of the peak point from${\text{ΔY}}_{\text{t}} {\text{= δ(T}}_{\text{p}} \text{)} {{\text{Y}}^{̇}}_{\text{p}}$ and judge if this is larger or smaller than the maximum speed Ẏ_{MAX} of the actuator and thereby judge if the operation is at the maximum speed (trapezoidal operation (4) to (6) in Fig. 10. The parameter δ(Tₚ) may be used in this way as well. Note that even if the patterns of acceleration and deceleration differ, they may be similarly applied.

Therefore, in Fig. 10, when the amount of movement is given as ΔTₜ₅ and the acceleration and deceleration time is given as Tₚ, it is possible to judge that${\text{δ(T}}_{\text{p}} \text{) •} {{\text{Y}}^{̇}}_{\text{max}} {\text{= ΔY}}_{\text{max}} {\text{< ΔY}}_{\text{t5}}$

Therefore, the result is${\text{ΔY}}_{\text{t5}} {\text{= ΔY}}_{\text{max}} {\text{+ ΔY}}_{\text{0}}$ and the amount of movement ΔY₀ of the maximum acceleration portion can be easily calculated.

In the same way, the time T₀ for ΔY₀ to be moved at the speed of Ẏ_{MAX} can be found by the following equation (25):${\text{T}}_{\text{0}} \text{=} \frac{{\text{ΔY}}_{\text{0}}}{{{\text{Y}}^{̇}}_{\text{max}}}$

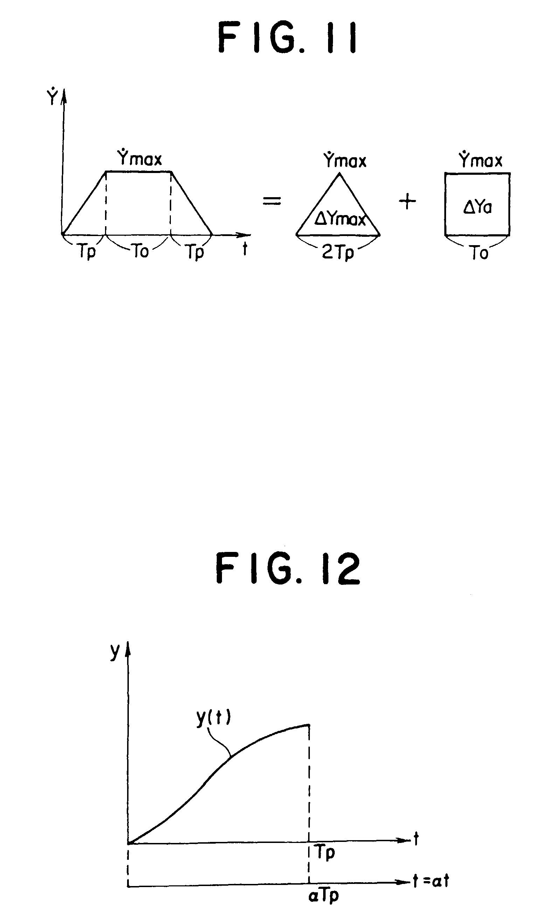

As a result, the total movement time Tₜ in this case becomes as in the following equation (26). This situation is shown in Fig. 11.${\text{T}}_{\text{t}} {\text{= 2T}}_{\text{p}} {\text{+ T}}_{\text{0}} {\text{= 2T}}_{\text{p}} \text{+} \frac{{\text{ΔY}}_{\text{0}}}{{{\text{Y}}^{̇}}_{\text{max}}} {\text{= 2T}}_{\text{p}} \text{+} \frac{{\text{ΔY}}_{\text{t5}} {\text{- ΔY}}_{\text{max}}}{{{\text{Y}}^{̇}}_{\text{max}}}$

Note that in this explanation, the peak time Tₚ was treated as a constant, but in the actual application, the peak time Tₚ is changed in accordance with the amount of movement ΔYₜ as shown in Fig. 8 and the min point and max point shown in Fig. 8 appear due to the presence of the f-characteristic of the servo loop or the motor maximum speed. Further, this application is easy even if the form of the acceleration and deceleration changes.

### (6) Expansion and Contraction of Time Axis

The total movement time Tₜ, the acceleration and deceleration times Tₚₐ and T_{pd} etc. are determined by the situation and laws of the control system such as the actuator, load, and power system. Therefore, consideration is given to a method for producing a target function in accordance with the determined times, that is, producing a target function with respect to the expansion and contraction of the time axis.

The situation when multiplying the time axis by a when the normalized target function y(t) is given is shown in Fig. 12. The object in this case is to derive an equation in the case where the equation (18) and equation (19) of the target function is subjected to expansion or contraction of the time axis.

Therefore, considering the effects of expansion and contraction of the time axis on the various amounts included at the right sides of equation (18) and equation (19), the following is concluded:
(i) Normalized target function y(t)
   From the graph shown in Fig. 12, 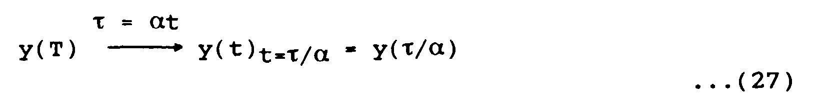 so${\text{y(T}}_{\text{p}} {\text{) = y(αT}}_{\text{p}} \text{/α)}$ stands and the value at t = Tₚ and the value at τ = αTₚ become equal.
(ii) Parameter β
   From equation (4), equation (5), and equation (28),$\text{β =} \frac{\text{1}}{{\text{y(T}}_{\text{p}} \text{)}} \text{=} \frac{\text{1}}{{\text{y(αT}}_{\text{p}} \text{/α)}}$ so the value of the parameter β does not change depending on the expansion or contraction of the time axis.
(iii) Parameter δ(Tₚ)
   From equation (9) and equation (10),${\text{δ(T}}_{\text{p}} \text{) =} \frac{{\text{y(T}}_{\text{p}} \text{)}}{{\text{y}}^{̇} {\text{(T}}_{\text{p}} \text{)}}$
Here, if the time axis is multiplied by α, then the result is 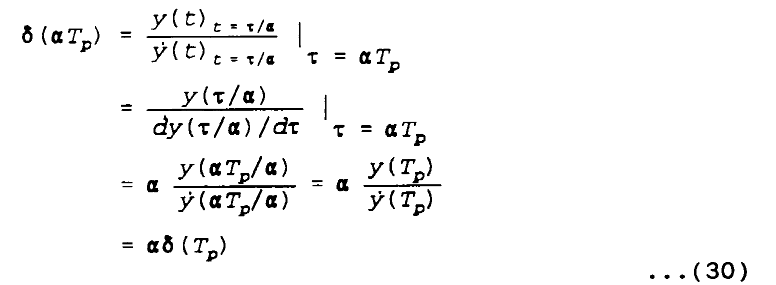 and the value of δ is multiplied by α equal to the multiplication of the time axis by α. This is understood as well from the fact that δ has a time (sec) dimension and the physical meaning of the parameter δ explained in Fig. 7.
In this way, the normalized target function y(t), the parameter β, and the parameter δ are transformed as follows by the expansion or contraction of the time axis (multiplication by α):

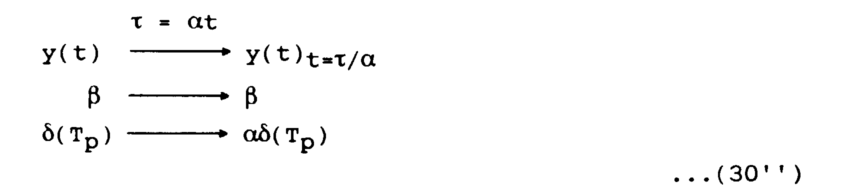

Accordingly, considering the expansion and contraction of the time axis (τ = αt) in the target function found by equation (18) and equation (19), the result becomes:${\text{Y}}_{\text{a}} {\text{(t)}}_{\text{t=τ/α}} \text{=} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}} {\text{• β}}_{\text{a}} {\text{• y}}_{\text{a}} {\text{(t)}}_{\text{t=τ/α}} {\text{0 ≤ t ≤ αt}}_{\text{pa}}$${\text{Y}}_{\text{d}} {\text{(t)}}_{\text{t=τ/α}} \text{=} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔY}}_{\text{t}} {\text{• β}}_{\text{d}} {\text{• y}}_{\text{d}} {\text{(t)}}_{\text{t=τ/α}} {\text{0 ≤ t ≤ αt}}_{\text{pd}}$ and these equation (18') and equation (19') are derived equations of the target functions Yₐ(t) and Y_{d}(t) enabling free change of the shape of the acceleration and deceleration, the amount of movement, and the movement time (α).

### [Examples of Application]

Next, the present invention will be explained in further detail by illustrating specific normalized target functions set based on the principle of the present invention explained above. However, the present invention may be applied to any normalized target function. The specific examples shown below of course are only examples of the same.

### Triangular Type

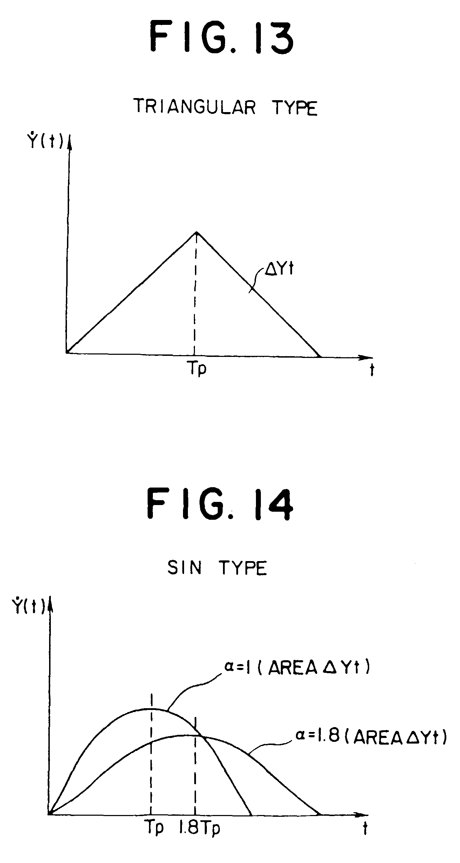

Regarding the triangular acceleration and deceleration pattern shown in Fig. 13, the normalized target function y(t) is determined so as to be dimension-less, so for example if$\text{y(t) =} \frac{\text{1}}{{\text{T}}_{\text{p}} {}^{\text{2}}} {\text{t}}^{\text{2}}$ the target speed function becomes the following by differentiation of the two sides of equation (31) by the time t:${\text{y}}^{̇} \text{(t) =} \frac{\text{2}}{{\text{T}}_{\text{p}} {}^{\text{2}}} \text{t}$

On the other hand, according to equation (4) and equation (5), the parameter β is$\text{β =} \frac{\text{1}}{{\text{y(T}}_{\text{p}} \text{)}} \text{= 1}$ so from equation (9) and equation (10), the parameter δ becomes$\text{δ(} \text{TP} \text{) =} \frac{\text{y} \text{(} \text{Tp} \text{)}}{{\text{y}}^{̇} \text{(} \text{Tp} \text{)}} \text{=} \frac{\frac{\text{1}}{{\text{T}}_{\text{p}} {}^{\text{2}}} {\text{T}}_{\text{p}} {}^{\text{2}}}{\frac{\text{2}}{{\text{T}}_{\text{p}} {}^{\text{2}}} {\text{T}}_{\text{p}}} \text{=} \frac{\text{1}}{\text{2}} {\text{T}}_{\text{p}}$

In such a triangular acceleration and deceleration pattern, there is the advantage that calculation at the time of finding the target function is easy, but since the acceleration is discontinuous, there are the disadvantages that shock is given to the servo system and the movement time cannot be shortened.

### Sine Type

In the sine type deceleration pattern shown in Fig. 14, the following stand:$\text{y} \text{(} \text{t} \text{) = -sin} \frac{\text{π}}{{\text{T}}_{\text{p}}} \text{t} \text{+} \frac{\text{π}}{{\text{T}}_{\text{p}}} \text{t}$${\text{y}}^{̇} \text{(} \text{t} \text{) = -} \frac{\text{π}}{{\text{T}}_{\text{p}}} \text{cos} \frac{\text{π}}{{\text{T}}_{\text{p}}} \text{t} \text{+} \frac{\text{π}}{{\text{T}}_{\text{p}}}$$\text{β =} \frac{\text{1}}{{\text{y(T}}_{\text{p}} \text{)}} \text{=} \frac{\text{1}}{\text{π}}$$\text{δ(} {\text{T}}_{\text{p}} \text{) =} \frac{\text{y} \text{(} \text{Tp} \text{)}}{{\text{y}}^{̇} \text{(} \text{Tp} \text{)}} \text{=} \frac{\text{π}}{\frac{\text{π}}{{\text{T}}_{\text{p}}} \text{+} \frac{\text{π}}{{\text{T}}_{\text{p}}}} \text{=} \frac{\text{1}}{\text{2}} {\text{T}}_{\text{p}}$ so like with the above-mentioned triangular type, if use is made the normalized target functions the same as at acceleration and deceleration (yₐ(t) - y_{d}(t)) and the acceleration and deceleration times are equal (Tₚₐ = T_{pd}), the target function becomes as follows if the amount of movement is made ΔYₜ:

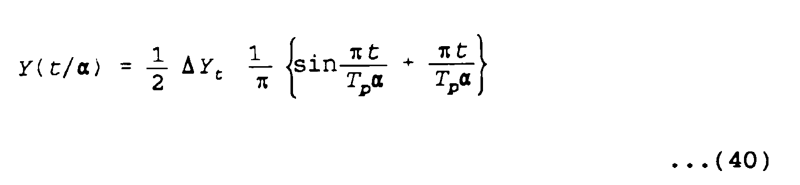

Note that during deceleration, the above Y(t/α) may be returned back at t = (αTₚ).

In such a sine type acceleration and deceleration pattern, calculation at the time of finding a target function becomes easy and further the function is a regular sine wave, so phase control of the input and output becomes possible. However, there is the defect of a long time until stopping.

### Exp Type

This exp type acceleration and deceleration pattern is one of the optimal target functions considering the characteristic of a positional servo loop (so called "f-characteristic"). Further, this target function is a function which can be infinitely differentiated at all points, so has the advantage of not causing unnecessary vibration in the mechanical system. Further, calculation becomes easier if the servo loop is simulated by software.

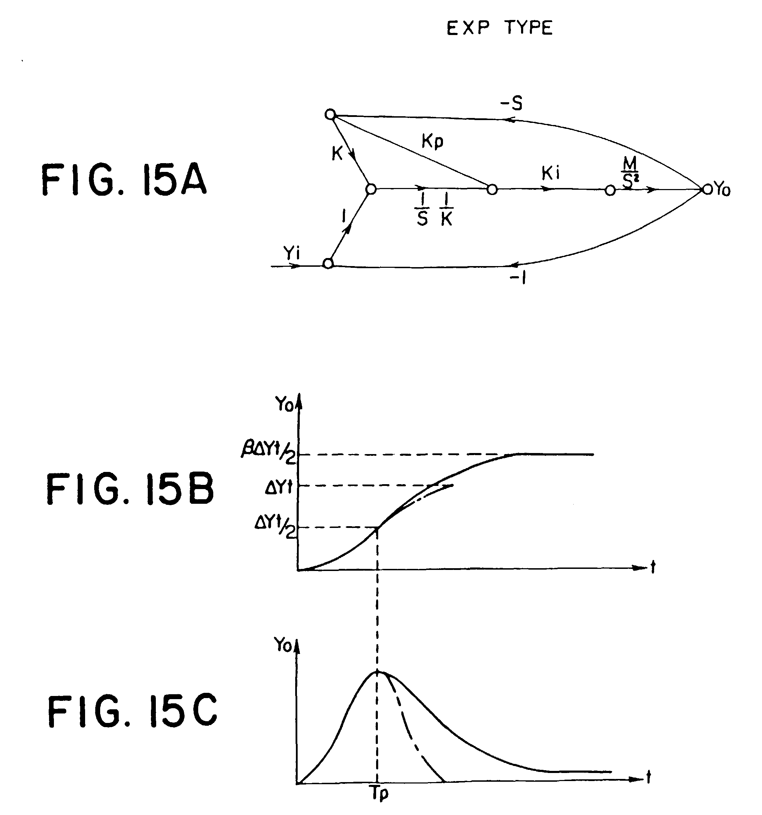

Figure 15A is a signal flow chart of the servo loop. Assuming that as the target function the step input of the amount of movement βΔYₜ/2${\text{Y}}_{\text{i}} \text{(s) =} \frac{{\text{β • ΔY}}_{\text{t}} \text{/2}}{\text{s}}$ is input, since there is no input faster than the step as Yᵢ, the output changes most quickly by this input.

In Fig. 15A, if the transfer function of Yᵢ -> Y₀ is calculated, it becomes as shown in the following equation (42):${\text{Y}}_{\text{0}} \text{(} \text{s} \text{) =} \frac{\text{1}}{{\text{(1 + T}}_{\text{1}} \text{s} {\text{)(1 + T}}_{\text{2}} \text{s} {\text{)(1 + T}}_{\text{3}} \text{s} \text{)}} \frac{\text{β • Δ} {\text{Y}}_{\text{t}} \text{/2}}{\text{s}}$ where,$\frac{\text{K}}{{\text{K}}_{\text{i}} \text{M}} \text{=} {\text{T}}_{\text{1}} {\text{T}}_{\text{2}} {\text{T}}_{\text{3}} {\text{K}}_{\text{p}} \text{K} \text{=} {\text{T}}_{\text{1}} {\text{T}}_{\text{2}} \text{+} {\text{T}}_{\text{2}} {\text{T}}_{\text{3}} \text{+} {\text{T}}_{\text{3}} {\text{T}}_{\text{1}} \text{K} \text{=} {\text{T}}_{\text{1}} \text{+} {\text{T}}_{\text{2}} \text{+} {\text{T}}_{\text{3}}$ and
T₁, T₂ and T₃ are the time constants in the third servo-loop.

On the other hand, if this equation (41) is subjected to an inverse-Laplace transformation, then${\text{Y}}_{\text{o}} \text{(} \text{t} \text{) = β} \frac{{\text{ΔY}}_{\text{t}}}{\text{2}} \text{•} \text{1 -} \frac{{\text{T}}_{\text{1}} {}^{\text{2}}}{\text{(} {\text{T}}_{\text{1}} \text{-} {\text{T}}_{\text{2}} \text{) (} {\text{T}}_{\text{1}} \text{-} {\text{T}}_{\text{3}} \text{)}} \text{exp (-} \text{t} \text{/} {\text{T}}_{\text{1}} \text{) +} \frac{{\text{T}}_{\text{2}} {}^{\text{2}}}{\text{(} {\text{T}}_{\text{1}} \text{-} {\text{T}}_{\text{2}} \text{) (} {\text{T}}_{\text{2}} \text{-} {\text{T}}_{\text{3}} \text{)}} \text{exp (-} \text{t} \text{/} {\text{T}}_{\text{2}} \text{) -} \frac{{\text{T}}_{\text{3}} {}^{\text{2}}}{\text{(} {\text{T}}_{\text{1}} \text{-} {\text{T}}_{\text{3}} \text{) (} {\text{T}}_{\text{2}} \text{-} {\text{T}}_{\text{3}} \text{)}} \text{exp (-} \text{t} \text{/} {\text{T}}_{\text{3}} \text{)}$

If the two sides are differentiated by the time t to find the speed, then the result is

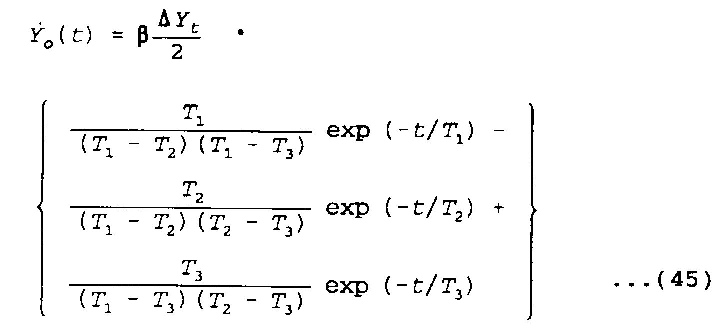

If this movement distance Y₀(t) and speed Y₀(t)dot are shown with respect to time, then they can be expressed as shown in Fig. 15B and Fig. 15C. At this time, it is understood that the distance of movement up to the time Tₚ becomes:

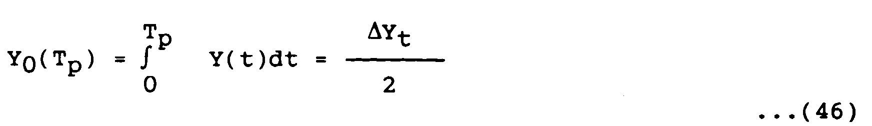

Therefore, if the speed Y₀(t)dot between 0≤ t≤ Tₚ is reversed with respect to the time axis at the time t = Tₚ, then the target functions shown by the dotted lines in Figs. 15B and 15C are obtained.

This target function is output to the step input of the servo loop shown in Fig. 15A, so is the maximum speed for the servo loop, Further, it is filtered, so it is considered the most suitable as the input.

Further, the β defined by equation (41) is the same as the parameter β of equation (4) defined by the normalized target function as will be understood from a comparison of the forms of equation (44) and equation (45) and equation (18') and equation (19').

Incidentally, the normalized target function of the exp type acceleration and deceleration pattern and the parameters β and δ may be found as follows:
First, from the form of equation (44), the normalized target function y(t) is$\text{y} \text{(} \text{t} \text{) = 1 -} \frac{{\text{T}}_{\text{1}} {}^{\text{2}}}{\text{(} {\text{T}}_{\text{1}} \text{-} {\text{T}}_{\text{2}} \text{) (} {\text{T}}_{\text{1}} \text{-} {\text{T}}_{\text{3}} \text{)}} \text{exp (-} \text{t} \text{/} {\text{T}}_{\text{1}} \text{) +} \frac{{\text{T}}_{\text{2}} {}^{\text{2}}}{\text{(} {\text{T}}_{\text{1}} \text{-} {\text{T}}_{\text{2}} \text{) (} {\text{T}}_{\text{2}} \text{-} {\text{T}}_{\text{3}} \text{)}} \text{exp (-} \text{t} \text{/} {\text{T}}_{\text{2}} \text{) -} \frac{{\text{T}}_{\text{3}} {}^{\text{2}}}{\text{(} {\text{T}}_{\text{1}} \text{-} {\text{T}}_{\text{3}} \text{) (} {\text{T}}_{\text{2}} \text{-} {\text{T}}_{\text{3}} \text{)}} \text{exp (-} \text{t} \text{/} {\text{T}}_{\text{3}} \text{)}$

By differentiating the two sides by the time t, the result becomes${\text{y}}^{̇} \text{(} \text{t} \text{) =} \frac{{\text{T}}_{\text{1}}}{\text{(} {\text{T}}_{\text{1}} \text{-} {\text{T}}_{\text{2}} \text{) (} {\text{T}}_{\text{1}} \text{-} {\text{T}}_{\text{3}} \text{)}} \text{exp (-} \text{t} \text{/} {\text{T}}_{\text{1}} \text{) -} \frac{{\text{T}}_{\text{2}}}{\text{(} {\text{T}}_{\text{1}} \text{-} {\text{T}}_{\text{2}} \text{) (} {\text{T}}_{\text{2}} \text{-} {\text{T}}_{\text{3}} \text{)}} \text{exp (-} \text{t} \text{/} {\text{T}}_{\text{2}} \text{) +} \frac{{\text{T}}_{\text{3}}}{\text{(} {\text{T}}_{\text{1}} \text{-} {\text{T}}_{\text{3}} \text{) (} {\text{T}}_{\text{2}} \text{-} {\text{T}}_{\text{3}} \text{)}} \text{exp (-} \text{t} \text{/} {\text{T}}_{\text{3}} \text{)}$

Therefore, from equation (4), the parameter β is given by

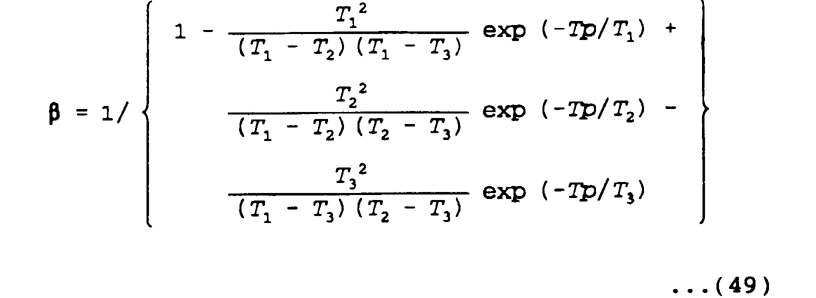

At this time, Tₚ is an inherent value for the normalized target function y(t) and is the same even if the amount of movement changes. Further, if the time axis is multiplied by α, the exp (-t/T₁) in equation (49) is transformed to exp (-t/αT₁), but at the same time, Tₚ -> αTₚ, so in the end$\text{β =} \frac{\text{1}}{{\text{y(T}}_{\text{p}} \text{)}} \text{=} \frac{\text{1}}{{\text{y(αT}}_{\text{p}} \text{/α)}}$ and the same value is obtained.

Next, the parameter δ becomes$\text{δ(} \text{Tp} \text{) =} \frac{\text{2} \text{y} \text{(} \text{Tp} \text{)}}{{\text{y}}^{̇} \text{(} \text{Tp} \text{)}}$ but if the time axis is multiplied by α, then the result becomes$\text{δ(α} {\text{T}}_{\text{p}} \text{) = αδ(} {\text{T}}_{\text{p}} \text{)}$

Note that if the signal flow chart shown in Fig. 15A is digitalized and realized by software and steps are input, then it is possible to easily find the target function even without complicated calculations as shown in the above-mentioned equation (44) and equation (45).

### Combinations

The specific examples described above were examples of use of the same type of functions for the normalized target functions of acceleration and deceleration, but in the present invention, it is also possible to use patterns where the normalized target functions for acceleration and deceleration differ.

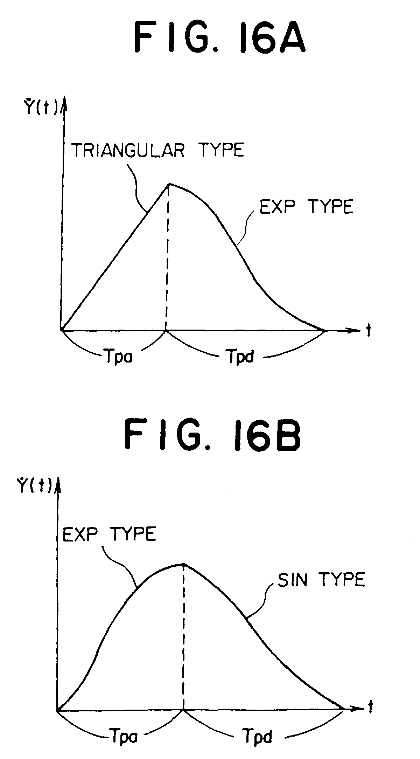

For example, the acceleration and deceleration pattern shown in Fig. 16A is an example of use of a triangular type acceleration pattern and an exp type deceleration pattern. Further, the acceleration and deceleration pattern shown in Fig. 16B is an example of use of the exp type acceleration pattern and the sine type deceleration pattern.

In short, which kind of acceleration and deceleration pattern to use may be determined by the characteristics of the servo loop, the characteristics of the load of the actuator, etc., for example.

Note that the embodiments explained above were given to facilitate the understanding of the present invention and were not given to limit the present invention. Accordingly, the elements disclosed in the above embodiments include all design modifications and equivalents falling under the technical scope of the present invention.

For example, when the above-mentioned normalized target functions are complicated and the types of the same are complicated, if real time processing is required, a load may be placed on the calculation time of the CPU. In such a case, when the system is started up and initialized, the normalized target functions are calculated in advance just once and the results are stored in the memory. Further, when performing processing in real time, it is possible to perform linear interpolation in accordance with need while referring to the memory.

As explained above, it is possible to freely set the acceleration and deceleration pattern regardless of the amount of movement or the movement time and as a result it is possible to improve the precision of stopping at the time of stopping and to shorten the movement time. Further, changes in the movement time and movement distance may be flexibly dealt with as well, so it becomes possible to freely design characteristics of the movement time and movement distance.

Such an application can be expected to be of broad use in the control of various types of PTP (point to point) operations such as robot control, temperature control, camera focus control, slide control of a CD player, video disk, and the like, DC point control of electrical circuits, and the like.

## Claims

1. A numerical control method for controlling the value of a parameter (Y), as it changes between a first reference value and a second reference value, in conformity with a target function (Y(t)) defining how the value of the controlled parameter (Y) changes with time, characterised in that it comprises the following steps:
inputting a value for the difference (ΔYₜ) between the first and second reference values of the controlled parameter;
inputting a normalised target function (y(t)), wherein the normalised target function (y(t)) is a function defining a desired pattern of change of said controlled parameter (Y) with time, and comprises a first function (yₐ(t)) defining the desired pattern of change during a time period (Tpa) when the rate of change of the controlled parameter (Y) is increasing and a second function (y_{d}(t)) defining the desired pattern of change during a time period (Tpd) when the rate of change of the controlled parameter (Y) is decreasing;
calculating correction values (β,δ) based on said input difference (ΔYₜ) and said input normalised target function (y(t)); and
computing said target function (Y(t)) from said input difference (ΔYₜ), said input normalised target function (y(t)) and from the calculated correction values (β,δ), said target function (Yₐ(t)) during the time period when the rate of change of the controlled parameter is increasing being computed according to:${\text{Y}}_{\text{a}} \text{(t) =} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔYt • β}}_{\text{a}} {\text{• y}}_{\text{a}} \text{(t)}$ and said target function (Y_{d}(t)) during the time period when the rate of change of the controlled parameter is decreasing being computed according to:${\text{Y}}_{\text{d}} \text{(t) =} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔYt • β}}_{\text{d}} {\text{• y}}_{\text{d}} \text{(t)}$ where${\text{δ}}_{\text{a}} {\text{(T}}_{\text{pa}} \text{) =} \frac{{\text{y}}_{\text{a}} {\text{(T}}_{\text{pa}} \text{)}}{{{\text{y}}^{̇}}_{\text{a}} {\text{(T}}_{\text{pa}} \text{)}}$${\text{δ}}_{\text{d}} {\text{(T}}_{\text{pd}} \text{) =} \frac{{\text{y}}_{\text{d}} {\text{(T}}_{\text{pd}} \text{)}}{{{\text{y}}^{̇}}_{\text{d}} {\text{(T}}_{\text{pd}} \text{)}}$${\text{β}}_{\text{a}} \text{=} \frac{\text{1}}{{\text{y}}_{\text{a}} {\text{(T}}_{\text{pa}} \text{)}}$${\text{β}}_{\text{d}} \text{=} \frac{\text{1}}{{\text{y}}_{\text{d}} {\text{(T}}_{\text{pd}} \text{)}} \text{.}$

2. A numerical control method according to claim 1, wherein when the first and second functions of said normalised target function are respective triangular curves, βₐ = 1 and β_{d} = 1.

3. A numerical control system for controlling the value of a parameter (Y), as it changes between a first reference value and a second reference value, in conformity with a target function (Y(t)) defining how the value of the controlled parameter (Y) changes with time, characterised in that the system comprises:
an input unit which receives as an input the value of the difference (ΔYₜ) between said first and second reference values of the controlled parameter, and a normalised target function (y(t)), the normalised target function (y(t)) being a function defining a desired pattern of change of said controlled parameter (Y) with time, and comprising a first function (yₐ(t)) defining the desired pattern of change during a time period (Tpa) when the rate of change of the controlled parameter (Y) is increasing and a second function (y_{d}(t)) defining the desired pattern of change during a time period (Tpd) when the rate of change of the controlled parameter (Y) is decreasing, said first and second functions (yₐ(t),y_{d}(t)) each being a dimensionless smooth continuous function;
a correction value calculating unit which calculates correction values (β,δ) based on said difference (ΔYₜ) and on said normalised target function (y(t)); and
a target function computation unit which computes the target function (Y(t)) based on the input normalised target function (y(t)), the input value for the difference (ΔYₜ) between the first and second values of the controlled parameter, and the calculated correction values (β,δ);
wherein the target function computation unit is adapted to compute the value of said target function (Yₐ(t)) applicable during the time period when the rate of change of the controlled parameter is increasing according to:${\text{Y}}_{\text{a}} \text{(t) =} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔYt • β}}_{\text{a}} {\text{• Y}}_{\text{a}} \text{(t)}$ and to compute the value of said target function (Y_{d}(t)) applicable during the time period when the rate of change of the controlled parameter is decreasing according to:${\text{Y}}_{\text{d}} \text{(t) =} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{• ΔYt • β}}_{\text{d}} {\text{• y}}_{\text{d}} \text{(t)}$ where${\text{δ}}_{\text{a}} {\text{(T}}_{\text{pa}} \text{) =} \frac{{\text{y}}_{\text{a}} {\text{(T}}_{\text{pa}} \text{)}}{{{\text{y}}^{̇}}_{\text{a}} {\text{(T}}_{\text{pa}} \text{)}}$${\text{δ}}_{\text{d}} {\text{(T}}_{\text{pd}} \text{) =} \frac{{\text{y}}_{\text{d}} {\text{(T}}_{\text{pd}} \text{)}}{{{\text{y}}^{̇}}_{\text{d}} {\text{(T}}_{\text{pd}} \text{)}}$${\text{β}}_{\text{a}} \text{=} \frac{\text{1}}{{\text{y}}_{\text{a}} {\text{(T}}_{\text{pa}} \text{)}}$${\text{β}}_{\text{d}} \text{=} \frac{\text{1}}{{\text{y}}_{\text{d}} {\text{(T}}_{\text{pd}} \text{)}} \text{.}$

4. A numerical control system according to claim 3, wherein when the first and second functions of said input normalised target function are respective triangular curves, βₐ = 1 and β_{d} = 1.

## Patentansprüche

1. Numerisches Steuerungsverfahren für die Steuerung des Werts eines Parameters (Y), während dieser sich zwischen einem ersten Referenzwert und einem zweiten Referenzwert ändert, nach Maßgabe einer Zielfunktion (Y(t)), die definiert, wie sich der Wert des gesteuerten Parameters (Y) zeitlich ändert,
**gekennzeichnet durch** die folgenden Verfahrensschritte:
Eingeben eines Werts für die Differenz (ΔYₜ) zwischen dem ersten und dem zweiten Referenzwert des gesteuerten Parameters,
Eingeben einer normierten Zielfunktion (y(t)), wobei diese normierte Zielfunktion (y(t)) eine Funktion ist, die ein gewünschtes Muster der zeitlichen Änderung des gesteuerten Parameters (Y) definiert und eine erste Funktion (yₐ(t)) umfaßt, die das gewünschte Änderungsmuster während einer Zeitperiode (Tpa) definiert, in der die Änderungsrate des gesteuerten Parameters (Y) großer wird, und eine zweite Funktion (y_{d}(t)), die das gewünschte Änderungsmuster während einer Zeitperiode (Tpd) definiert, in der die Änderungsrate des gesteuerten Parameters (Y) kleiner wird,
Berechnen von Korrekturwerten (β, δ) auf der Basis der eingegebenen Differenz (ΔYₜ) und der eingegebenen normierten Zielfunktion (y(t)) und
Berechnen der Zielfunktion (Y(t)) aus der eingegebenen Differenz (ΔYₜ), der eingegebenen normierten Zielfunktion (y(t)) und den berechneten Korrekturwerten (β, δ), wobei die Zielfunktion (yₐ(t)) während der Zeitperiode, in der die Änderungsrate des gesteuerten Parameters (Y) größer wird, berechnet wird nach der Gleichung:${\text{Y}}_{\text{a}} \text{(t) =} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{· ΔY}}_{\text{t}} {\text{· β}}_{\text{a}} {\text{· y}}_{\text{a}} \text{(t)}$ und die Zielfunktion (y_{d}(t)) während der Zeitperiode, in der die Änderungsrate des gesteuerten Parameters kleiner wird, berechnet wird nach der Gleichung:${\text{Y}}_{\text{d}} \text{(t) =} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{· ΔY}}_{\text{t}} {\text{· β}}_{\text{d}} {\text{· Y}}_{\text{d}} \text{(t)}$ worin${\text{δ}}_{\text{a}} {\text{(T}}_{\text{pa}} \text{) =} \frac{{\text{y}}_{\text{a}} {\text{(T}}_{\text{pa}} \text{)}}{{{\text{y}}^{̇}}_{\text{a}} {\text{(T}}_{\text{pa}} \text{)}}$${\text{δ}}_{\text{d}} {\text{(T}}_{\text{pd}} \text{) =} \frac{{\text{y}}_{\text{d}} {\text{(T}}_{\text{pd}} \text{)}}{{{\text{y}}^{̇}}_{\text{d}} {\text{(T}}_{\text{pd}} \text{)}}$${\text{β}}_{\text{a}} \text{=} \frac{\text{1}}{{\text{y}}_{\text{a}} {\text{(T}}_{\text{pa}} \text{)}}$${\text{β}}_{\text{d}} \text{=} \frac{\text{1}}{{\text{y}}_{\text{d}} {\text{(T}}_{\text{pd}} \text{)}}$

2. Numerisches Steuerungsverfahren nach Anspruch 1, bei dem βₐ = 1 und β_{d} = 1, wenn die erste und die zweite Funktion der normierten Zielfunktion Dreieckkurven sind.

3. Numerisches Steuerungssytem für die Steuerung des Werts eines Parameters (Y), während dieser sich zwischen einem ersten Referenzwert und einem zweiten Referenzwert ändert, nach Maßgabe einer Zielfunktion (Y(t)), die definiert, wie sich der Wert des gesteuerten Parameters (Y) zeitlich ändert,
**dadurch gekennzeichnet,** daß das System aufweist:
eine Eingabeeinheit, die als Eingangssignal den Wert der Differenz (ΔYₜ) zwischen dem ersten und dem zweiten Referenzwert des gesteuerten Parameters und eine normierte Zielfunktion (y(t)) aufnimmt, wobei diese normierten Zielfunktion (y(t)) eine Funktion ist, die ein gewünschtes Muster der zeitlichen Änderung des gesteuerten Parameters (Y) definiert und eine erste Funktion (yₐ(t)) umfaßt, die das gewünschte Änderungsmuster während einer Zeitperiode (Tpa) definiert, in der die Änderungsrate des gesteuerten Parameters (Y) größer wird, und eine zweite Funktion (y_{d}(t)), die das gewünschte Änderungsmuster während einer Zeitperiode (Tpd) definiert, in der die Änderungsrate des gesteuerten Parameters (Y) kleiner wird, wobei die erste und die zweite Funktion (yₐ(t), y_{d}(t)) jeweils eine dimensionslose, glatte kontinuierliche Funktion darstellen,
eine Korrekturwert-Berechnungseinheit, die Korrekturwerte (β, δ) auf der Basis der genannten Differenz (ΔYₜ) und der normierten Zielfunktion (y(t)) berechnet und
eine Zielfunktions-Berechnungseinheit, die die Zielfunktion (Y(t)) auf der Basis der eingegebenen normierten Zielfunktion (y(t)), des eingegebenen Werts für die Differenz (ΔYₜ) zwischen dem ersten und dem zweiten Wert des gesteuerten Parameters und der berechneten Korrekturwerte (β, δ) berechnet, wobei die Zielfunktions-Berechnungseinheit so ausgebildet ist, daß sie den Wert der Zielfunktion (yₐ(t)), die während der Zeitperiode anzuwenden ist, in der die Änderungsrate des gesteuerten Parameters größer wird, nach der Gleichung:${\text{Y}}_{\text{a}} \text{(t) =} \frac{{\text{δ}}_{\text{a}} {\text{(T}}_{\text{pa}} \text{)}}{{\text{δ}}_{\text{a}} {\text{(T}}_{\text{pa}} {\text{) + δ}}_{\text{d}} {\text{(T}}_{\text{pd}} \text{)}} {\text{· ΔYt · β}}_{\text{a}} {\text{· y}}_{\text{a}} \text{(t)}$ berechnet und den Wert der Zielfunktion (y_{d}(t)), während der Zeitperiode anzuwenden ist, in der die Änderungsrate des gesteuerten Parameters kleiner wird, nach der Gleichung:${\text{Y}}_{\text{d}} \text{(t) =} \frac{{\text{δ}}_{\text{d}} {\text{(T}}_{\text{pd}} \text{)}}{{\text{δ}}_{\text{a}} {\text{(T}}_{\text{pa}} {\text{) + δ}}_{\text{d}} {\text{(T}}_{\text{pd}} \text{)}} {\text{· ΔY}}_{\text{t}} {\text{· β}}_{\text{d}} {\text{· y}}_{\text{d}} \text{(t)}$ berechnet, worin${\text{δ}}_{\text{a}} {\text{(T}}_{\text{pa}} \text{) =} \frac{{\text{y}}_{\text{a}} {\text{(T}}_{\text{pa}} \text{)}}{{{\text{y}}^{̇}}_{\text{a}} {\text{(T}}_{\text{pa}} \text{)}}$${\text{δ}}_{\text{d}} {\text{(T}}_{\text{pd}} \text{) =} \frac{{\text{y}}_{\text{d}} {\text{(T}}_{\text{pd}} \text{)}}{{{\text{y}}^{̇}}_{\text{d}} {\text{(T}}_{\text{pd}} \text{)}}$${\text{β}}_{\text{a}} \text{=} \frac{\text{1}}{{\text{y}}_{\text{a}} {\text{(T}}_{\text{pa}} \text{)}}$${\text{β}}_{\text{d}} \text{=} \frac{\text{1}}{{\text{y}}_{\text{d}} {\text{(T}}_{\text{pd}} \text{)}}$

4. Numerisches Steuerungssystem nach Anspruch 3, bei dem βₐ = 1 und β_{d} = 1, wenn die erste und die zweite Funktion der normierten Zielfunktion Dreieckkurven sind.

## Revendications

1. Procédé de commande numérique pour commander la valeur d'un paramètre (Y) lorsqu'il varie entre une première valeur de référence et une seconde valeur de référence, conformément à une fonction de consigne (Y(t)) définissant de quelle manière la valeur du paramètre commandé (Y) varie dans le temps, caractérisé en ce qu'il comprend les étapes suivantes consistant à :
introduire une valeur pour la différence (ΔYₜ) entre les première et seconde valeurs de référence du paramètre commandé;
envoyer une fonction de consigne normalisée (y(t)), dans laquelle la fonction de consigne normalisée (y(t)) est une fonction définissant un profil désiré de variation dudit paramètre commandé (Y) dans le temps et comporte une première fonction (yₐ(t)) définissant le profil désiré de variation pendant l'intervalle de temps (Tₚₐ) lorsque le taux de variation du paramètre commandé (Y) augmente, et une seconde fonction (y_{d}(t)) définissant le profil désiré de variation pendant un intervalle de temps (Tpd) lorsque le taux de variation du paramètre commandé (Y) diminue;
calculer des valeurs de correction (β,δ) sur la base de ladite différence d'entrée (ΔYₜ) et ladite fonction de consigne normalisée d'entrée (y(t)); et
calculer ladite fonction de consigne (Y(t)) à partir de ladite différence d'entrée (ΔYₜ), de ladite fonction de consigne normalisée d'entrée (y(t)) et des valeurs de correction calculées (β,δ), ladite fonction de consigne (Yₐ(t)) pendant l'intervalle de temps pendant lequel le taux de variation du paramètre commandé augmente, étant calculée conformément à :${\text{y}}_{\text{a}} \text{(t) =} \frac{{\text{δ}}_{\text{a}} {\text{(T}}_{\text{pa}} \text{)}}{{\text{δ}}_{\text{a}} {\text{(Tpa) + δ}}_{\text{d}} \text{(Tpd)}} {\text{. ΔY}}_{\text{t}} {\text{.β}}_{\text{a}} {\text{.y}}_{\text{a}} \text{(t)}$ et ladite fonction de consigne (Y_{d}(t)) pendant l'intervalle de temps pendant lequel le taux de variation du paramètre commandé diminue étant calculée conformément à :${\text{Y}}_{\text{d}} \text{(t) =} \frac{{\text{δ}}_{\text{d}} {\text{(T}}_{\text{pd}} \text{)}}{{\text{δ}}_{\text{a}} {\text{(Tpa) + δ}}_{\text{d}} \text{(Tpd)}} {\text{. ΔY}}_{\text{t}} {\text{.β}}_{\text{d}} {\text{.y}}_{\text{d}} \text{(t)}$ avec${\text{δ}}_{\text{a}} {\text{(T}}_{\text{pa}} \text{) =} \frac{{\text{y}}_{\text{a}} {\text{(T}}_{\text{pa}} \text{)}}{{{\text{y}}^{̇}}_{\text{a}} {\text{(T}}_{\text{pa}} \text{)}}$${\text{δ}}_{\text{d}} {\text{(T}}_{\text{pd}} \text{) =} \frac{{\text{y}}_{\text{d}} {\text{(T}}_{\text{pd}} \text{)}}{{{\text{y}}^{̇}}_{\text{d}} {\text{(T}}_{\text{pd}} \text{)}}$${\text{β}}_{\text{a}} \text{=} \frac{\text{1}}{{\text{y}}_{\text{a}} {\text{(T}}_{\text{pa}} \text{)}}$${\text{β}}_{\text{d}} \text{=} \frac{\text{1}}{{\text{y}}_{\text{d}} {\text{(T}}_{\text{pd}} \text{)}}$

2. Procédé de commande numérique selon la revendication 1, selon lequel, lorsque les première et seconde fonctions de ladite fonction de consigne normalisée sont des courbes triangulaires respectives, on a βₐ = 1 et β_{d} = 1.

3. Système de commande numérique pour commander la valeur d'un paramètre (Y) lorsqu'il varie entre une première valeur de référence et une seconde valeur de référence, conformément à une fonction de consigne (Y(t)) définissant de quelle manière la valeur du paramètre commandé (Y) varie dans le temps, caractérisé en ce que le système comprend :
une unité d'entrée, qui reçoit en tant que signal d'entrée la valeur de la différence (ΔYₜ) entre lesdites première et seconde valeurs de référence du paramètre commandé, et une fonction de consigne normalisée (Y(t)), la fonction de consigne normalisée (Y(t)) étant une fonction définissant un profil désiré de variation dudit paramètre commandé (Y) dans le temps, et comprenant une première fonction (Yₐ(t)) définissant le profil désiré de variation pendant un intervalle de temps (Tpa) pendant lequel le taux de variation du paramètre commandé (Y) augmente, et une seconde fonction (Y_{d}(t)) définissant le profil désiré de variation pendant un intervalle de temps (Tpd), pendant lequel le taux de variation du paramètre commandé (Y) diminue, lesdites première et seconde fonctions (Yₐ(t), Y_{d}(t)) étant chacune une fonction continue uniforme sans dimension;
une unité de calcul de valeurs de corrections, qui calcule les valeurs de corrections (δ, β) sur la base de ladite différence (ΔYₜ) et sur la base de ladite fonction de consigne normalisée (y(t)); et
une unité de calcul de fonction de consigne, qui calcule la fonction de consigne (Y(t)) sur la base de la fonction de consigne normalisée d'entrée (y(t)), de la valeur d'entrée pour la différence (ΔYₜ) entre les première et seconde valeurs des paramètres commandés, et des valeurs de corrections calculées (δ, β);
l'unité de calcul de la fonction d'antenne étant adaptée pour calculer la valeur de ladite fonction de consigne (Yₐ(t)) applicable pendant un intervalle de temps pendant lequel le taux de variation du paramètre commandé augmente conformément à :${\text{Y}}_{\text{a}} \text{(t) =} \frac{{\text{δ}}_{\text{a}} {\text{(T}}_{\text{pa}} \text{)}}{{\text{δ}}_{\text{a}} {\text{(Tpa) + δ}}_{\text{d}} \text{(Tpd)}} {\text{. ΔY}}_{\text{t}} {\text{.β}}_{\text{a}} {\text{.y}}_{\text{a}} \text{(t);}$ et calculer la valeur de ladite fonction de consigne (Y_{d}(t)) applicable pendant l'intervalle de temps lorsque le taux de variation du paramètre commandé diminue conformément à :${\text{Y}}_{\text{d}} \text{(t) =} \frac{{\text{δ}}_{\text{d}} {\text{(T}}_{\text{pd}} \text{)}}{{\text{δ}}_{\text{a}} {\text{(Tpa)+δ}}_{\text{d}} \text{(Tpd)}} {\text{. ΔY}}_{\text{t}} {\text{.β}}_{\text{d}} {\text{.y}}_{\text{d}} \text{(t)}$ avec${\text{δ}}_{\text{a}} {\text{(T}}_{\text{pa}} \text{) =} \frac{{\text{y}}_{\text{a}} {\text{(T}}_{\text{pa}} \text{)}}{{{\text{y}}^{̇}}_{\text{a}} {\text{(T}}_{\text{pa}} \text{)}}$${\text{δ}}_{\text{d}} {\text{(T}}_{\text{pd}} \text{) =} \frac{{\text{y}}_{\text{d}} {\text{(T}}_{\text{pd}} \text{)}}{{{\text{y}}^{̇}}_{\text{d}} {\text{(T}}_{\text{pd}} \text{)}}$${\text{β}}_{\text{a}} \text{=} \frac{\text{1}}{{\text{y}}_{\text{a}} {\text{(T}}_{\text{pa}} \text{)}}$${\text{β}}_{\text{d}} \text{=} \frac{\text{1}}{{\text{y}}_{\text{d}} {\text{(T}}_{\text{pd}} \text{)}}$

4. Procédé de commande numérique selon la revendication 3, selon lequel, lorsque les première et seconde fonctions de ladite fonction de consigne normalisée d'entrée sont des courbes triangulaires respectives, on a βₐ = 1 et β_{d} = 1.
